# EUROPÄISCHE PATENTSCHRIFT

(11) **EP 4 185 459 B1**
(45) Veröffentlichungstag und Bekanntmachung des Hinweises auf die Patenterteilung: **20.03.2024**
(21) Anmeldenummer: 21731936.7
(22) Anmeldetag: 02.06.2021
(51) Int. Cl.: B30B 9/12, B30B 9/18, G01F 13/00

(54) **VERFAHREN UND VORRICHTUNG ZUR MESSUNG DES FILTRATGEHALTS AN EINER SCHNECKENPRESSE**
METHOD AND DEVICE FOR MEASURING THE FILTRATE CONTENT ON A SCREW PRESS
PROCÉDÉ ET DISPOSITIF PERMETTANT DE MESURER LA TENEUR EN FILTRAT SUR UNE PRESSE À VIS

(30) Priorität: 21.07.2020 AT 506272020
(43) Veröffentlichungstag der Anmeldung: 31.05.2023
(73) Patentinhaber: Andritz AG, 8045 Graz (AT)
(72) Erfinder: EGGER, Markus, 8020 Graz (AT); PICHLER, Franco, 8570 Voitsberg (AT); STELZER, Daniel, 8663 Veitsch Graz (AT); WILLBERGER, Stefan, 8063 Eggersdorf bei Graz (AT)
(86) Internationale Anmeldenummer: PCT/EP2021/064778
(87) Internationale Veröffentlichungsnummer: WO 2022/017672

(56) Entgegenhaltungen:
- EP-A1- 1 873 123
- DE-A1-102017 115 080
- JP-A- S5 832 599
- JP-A- 2001 030 096

## Beschreibung

Die Erfindung betrifft eine Schneckenpresse zum Abscheiden von Filtrat aus einem Aufgabegut, umfassend einen Aufgabebereich, einen Entwässerungsbereich und einen Austrittsbereich, wobei der Schneckenpresse über den Aufgabebereich das Aufgabegut zuführbar ist, der Entwässerungsbereich eine in einer Filtertrommel um eine Rotationsachse drehbar angeordnete Pressschnecke umfasst und durch Rotation der Pressschnecke das Aufgabegut aus dem Aufgabebereich über den Entwässerungsbereich dem Austrittsbereich zuführbar ist, wobei das Aufgabegut im Entwässerungsbereich zwischen der Filtertrommel und der Pressschnecke geführt ist und das Filtrat durch die Filtertrommel abscheidbar ist.

Die Erfindung betrifft auch ein Verfahren zur Abscheidung von Filtrat aus einem Aufgabegut, bei dem das Aufgabegut einer erfindungsgemäßen Schneckenpresse über den Aufgabebereich zugeführt wird, im Entwässerungsbereich zwischen der um die Rotationsachse rotierenden Pressschnecke und der Filtertrommel das Filtrat aus dem Aufgabegut abgeschieden wird, wobei das Aufgabegut zwischen dem Aufgabebereich und dem Austrittsbereich komprimiert und das Filtrat durch die Filtertrommel abgeführt wird.

Die Erfindung betrifft weiter die Verwendung eines Sensors zur Messung des Filtratgehalts des Aufgabeguts in einer Schneckenpresse.

Schneckenpressen werden typischerweise zum Abscheiden von Filtrat aus einem Aufgabegut eingesetzt, z.B. in einer Faserschnecke oder einer Schlammschnecke. Dabei umfasst das Aufgabegut eine feste Phase (den Feststoff) und eine flüssige Phase (das Filtrat). Der Filtratgehalt bezeichnet dann den Anteil der flüssigen Phase (des Filtrats) am Aufgabegut. Durch Entwässerung wird Filtrat aus dem Aufgabegut abgeschieden und so der Filtratgehalt im Aufgabegut verringert. Dabei wird das Aufgabegut über den Aufgabebereich der Schneckenpresse zugeführt. In dem Entwässerungsbereich folgt die Entwässerung des Aufgabeguts, wobei der Entwässerungsbereich eine Filtertrommel und eine um eine Rotationsachse rotierbare Pressschnecke umfasst. Die Filtertrommel ist typischerweise perforiert, so dass das aus dem Aufgabegut ausgepresste Filtrat durch die Filtertrommel ausgeführt bzw. abgeschieden werden kann. Die Pressschnecke hat zum einen die Funktion das Aufgabegut vom Aufgabebereich zum Austrittsbereich zu transportieren, und zum anderen das Aufgabegut zunehmend zu komprimieren und so die Abscheidung von Filtrat durch die Filtertrommel hindurch zu ermöglichen.

Oft weist das Aufgabegut stark variierende Eigenschaften auf, wie z.B. einen schwankenden Filtratgehalt im Aufgabebereich, eine unterschiedliche Entwässerbarkeit bzw. Komprimierbarkeit, z.B. wegen einer unterschiedlichen Zusammensetzung oder eines abweichenden Aufbaus der festen Phase. Dabei ist es wichtig mit der Schneckenpresse einen bestimmten Filtratgehalt einstellen zu können und auch im Betrieb kontinuierlich halten zu können. Erst dann sind nachfolgende Prozesse optimal betreibbar. Oft wird dazu der Filtratgehalt am Auslass der Schneckenpresse in diskreten zeitlichen Abständen durch Probenahme erhoben, was eine manuelle Probenahme, Auswertung und Analyse der Probe bedeutet. Dies ist aufwändig und liefert auch erst mit einiger Verzögerung eine Aussage zum Betrieb der Schneckenpresse im Zeitpunkt der Probenahme. Die zeitliche Diskrepanz ist problematisch, da beispielsweise zwischenzeitlich keine optimal an den Filtratgehalt und daher nicht effektive Chemikaliendosierung möglich ist, bzw. der Filtratgehalt im Austrittsbereich schwanken und nachfolgende Prozesse - z.B. eine Verbrennung - schädlich beeinflussen kann.

Die DE 202017105625 U1 beschreibt eine Vorrichtung zur Trennung der Bestandteile einer Feststoffe enthaltenden Flüssigkeit, wobei die Innenmantelfläche des als Presszone ausgebildeten Auslassstutzens mindestens einen der Auslassbewegung des Feststoffkuchens einen Widerstand entgegensetzenden, erhabenen Vorsprung in der Form eines Sporns aufweist. Dabei kann mindestens ein Sporn einen Sensor aufweisen oder selbst ein Sensor sein und so können verschiedene Werte am Auslassstutzen der Vorrichtung, beispielsweise der Feuchtigkeitsgehalt, erfasst werden.

Die DE 102017115080 A1 beschreibt eine Vorrichtung nach dem Oberbegriff des Anspruchs 1 und ein Verfahren zur Einstellung des Trockensubstanzgehalts eines Feststoffkuchens mit einem in oder an dem Auslassstutzen vorhandenen Sensor zur Bestimmung des Feuchtigkeitsgehalts oder Druck des Feststoffkuchens.

Die DE 20 2012 008 077 U1 beschreibt einen Pressschneckenseparator mit einem Sensor zur Erfassung von Spannungen, die aufgrund des Feststoffes in zumindest einer Komponente des Pressschneckenseparators auftreten. So soll im Betrieb der Trockensubstanzgehalt des Feststoffes geregelt werden, der aus dem Pressschneckenseparator austritt.

Die DE 10 2017 115080 A1 offenbart ein Verfahren zur Einstellung des Trockensubstanzgehalts eines Feststoffkuchens und eine Vorrichtung zur Trennung der Bestandteile einer Feststoffe enthaltenden Flüssigkeit. So ist offenbart, dass die Stromaufnahme des Antriebs als Maß für den Feuchtigkeitsgehalt des erzeugten Feststoffkuchens erfasst wird und/oder der mittels wenigstens eines Sensors bestimmte Feuchtigkeitsgehalt oder Druck des Feststoffkuchens als Maß zur Abgabe des Feststoffkuchens verwendet wird.

Die EP1873123A1 offenbart einen Schlammeindicker, wobei ein Tank zur Aufnahme des eingedickten Schlamms ausgebildet ist und der Tank einen Leistungssensor zur Bestimmung der Schlammkonzentration umfasst. Dabei umfasst der Leistungssensor einen rotierbaren, zylindrischen Körper, der in dem eingedickten Schlamm eingetaucht ist, wobei über die Änderung in der Leistungsaufnahme auf die Schlammkonzentration geschlossen wird. Derart wird allerdings nicht direkt der Filtratgehalt gemessen, sondern über eine korrelierende Größe - dem Druck bzw. den durch den Druck induzierten Spannungen in mechanischen Komponenten - abgeschätzt. Da letztlich viele Störgrößen die Entwässerung beeinflussen kann der so bestimmte Filtratgehalt nur zur Orientierung dienen.

Ziel der Erfindung ist eine einfache, zeitnahe und genaue Messung des Filtratgehalts.

Dies gelingt erfindungsgemäß dadurch, dass im Austrittsbereich eine Sensoranordnung umfassend einen Sensor zur Messung des Filtratgehalts angeordnet ist, wobei der Sensor von dem Aufgabegut anströmbar und / oder umströmbar ist. Nach der Komprimierung des Aufgabeguts im Entwässerungsbereich wird das Aufgabegut dem Austrittsbereich zugeführt, wobei das Aufgabegut im Austrittsbereich entspannt wird, d.h. der Druck im Austrittsbereich gegenüber dem Entwässerungsbereich reduziert ist. Überraschenderweise wurde festgestellt, dass eine Messanordnung im Austrittsbereich vorteilhaft gegenüber einer Anordnung im Entwässerungsbereich ist. So werden bei einer Messanordnung im Entwässerungsbereich oft fehlerhafte Filtratgehalte ermittelt. Die erfindungsgemäße Anordnung im Austrittsbereich führt hingegen zu belastbaren Messergebnissen.

Dabei erlaubt die erfindungsgemäße Anordnung des Sensors im Austrittsbereich eine Messung des Filtratgehalts bei relativ gleichbleibendem Druck, da im Austrittsbereich die Entspannung des Aufgabeguts erfolgt (z.B. auf Umgebungsdruck oder auf das Druckniveau eines nachfolgenden Prozessschritts). Im Entwässerungsbereich hingegen sind je nach Betrieb der Schneckenpresse unterschiedliche Drücke gegeben. Erfindungsgemäß findet ein Sensor zur Messung des Filtratgehalts Verwendung. Vorteilhafterweise beruht der Sensor zur Messung des Filtratgehalts auf der Messung der Dielektrizitätskonstanten des Aufgabeguts. Erfindungsgemäß ist der Sensor von dem Aufgabegut angeströmt und / oder umströmt. Die Anströmung und / oder Umströmung des Sensors durch das Aufgabegut hat den Effekt, dass das Aufgabegut auf den Sensor eine Kraft entsprechend dem auf den Sensor wirkenden Druck des Aufgabeguts ausübt. Erfindungsgemäß ist der Filtratgehalt im Aufgabegut kontinuierlich, d.h. in-line, messbar.

Erfindungsgemäß ist die Schneckenpresse dadurch gekennzeichnet, dass ein von dem Aufgabegut auf den Sensor wirkender Druck über die Sensoranordnung kompensierbar ist, wobei die Sensoranordnung eine Führung umfasst und der Sensor zur Kompensierung des vom Aufgabegut auf den Sensor wirkenden Drucks über die Führung im Austrittsbereich bewegbar ist. Typischerweise handelt es sich bei dem zu entwässernden Aufgabegut um ein Nicht-Newtonsches Fluid. Überraschenderweise wurde nun festgestellt, dass die Dielektrizitätskonstante eine Druckabhängigkeit aufweist. Um Fehlinterpretationen der Dielektrizitätskonstanten und in Folge des Filtratgehalts zu vermeiden ist vorteilhafterweise der Sensor Teil einer Sensoranordnung, wobei der auf den Sensor wirkende Druck des Aufgabeguts durch die Sensoranordnung kompensiert werden kann und über die Kompensierung ein konstanter auf den Sensor wirkender Druck (Soll-Druck) realisiert werden kann. So kann der auf den Sensor wirkende Druck konstant gehalten werden, d.h. auf dem Niveau des Soll-Drucks, eine Beeinflussung der Dielektrizitätskonstanten durch einen abweichenden Druck vermieden werden und eine genaue Messung des Filtratgehalts durch Messung der Dielektrizitätskonstanten erfolgen. Überraschenderweise ist eine Kompensierung des auf den Sensor wirkenden Drucks dadurch möglich, dass der Sensor im Austrittsbereich über die Führung der Sensoranordnung bewegbar ist. Durch die Bewegbarkeit des Sensors im Austrittsbereich, kann der Sensor einem gegenüber dem Soll-Druck abweichenden Druck entlang der Führung ausweichen und sich im Austrittsbereich entsprechend dem Soll-Druck positionieren.

In einer vorteilhaften Ausgestaltung erlaubt die Führung der Sensoranordnung ein Bewegen des Sensors in einer Ebene, wobei die Rotationsachse der Pressschnecke die Normale zu dieser Ebene bildet. In einer weiteren vorteilhaften Ausgestaltung kann beispielsweise durch Bewegen des Sensors entlang der Führung der Abstand des Sensors zur Rotationsachse der Pressschnecke verändert werden.

Eine ebenso günstige Ausgestaltung der Schneckenpresse ist dadurch gekennzeichnet, dass über die Führung eine Kompensationskraft auf den Sensor aufbringbar ist, wobei die Kompensationskraft der aus dem auf den Sensor wirkenden Druck resultierenden Kraft entgegengesetzt ist. Vorteilhafterweise wird über die Führung eine Kompensationskraft auf den Sensor aufgebracht, wobei die Kompensationskraft der Kraft entsprechend dem auf den Sensor wirkenden Druck des Aufgabeguts entgegengerichtet ist. Im Kräftegleichgewicht, d.h. wenn Kompensationskraft und Kraft aus dem Druck des Aufgabeguts einander entsprechen, kommt es zu keiner Bewegung des Sensors. Bei einer Abweichung zwischen Kompensationskraft und Kraft aus dem Druck des Aufgabeguts kommt es zu einer Bewegung entlang der Führung in Richtung der größeren Kraft.

In einer vorteilhaften Ausführung wird eine konstante Kompensationskraft auf den Sensor aufgebracht. Dabei ist der Sensor über die Führung der Sensoranordnung in einem Verfahrbereich bewegbar, wobei zumindest in einem Teilbereich des Verfahrbereichs die auf den Sensor aufgebrachte Kompensationskraft konstant ist.

Eine besonders günstige Ausgestaltung ist dadurch gekennzeichnet, dass die Sensoranordnung eine Feder umfasst, wobei die Feder pneumatisch, hydraulisch, elektrisch oder magnetisch wirkend ist und über die Feder die Kompensationskraft auf den Sensor aufbringbar ist. Vorteilhafterweise kann über eine pneumatisch, hydraulisch, elektrisch oder magnetisch wirkende Feder eine Kompensationskraft aufgebracht werden. Eine pneumatische oder hydraulische Feder ist über einen pneumatisch bzw. hydraulisch wirkenden Zylinder realisierbar. Entsprechend dem pneumatischen bzw. hydraulischen Druck im Zylinder folgt eine Kompensationskraft auf den Sensor.

Besonders vorteilhaft ist eine Aufbringung der Kompensationskraft auf den Sensor über eine magnetische Feder, wobei die Kompensationskraft konstant ist. Solche magnetisch wirkenden Federn erlauben eine konstante Kraftwirkung über einen Bereich und damit eine konstante Kraftwirkung auf den Sensor zumindest in einem Teilbereich des Verfahrbereichs. Solche magnetisch wirkenden Federn werden als Konstantkraft-Federn für den industriellen Einsatz angeboten. Magnetisch wirkende Federn haben gegenüber pneumatisch, hydraulisch bzw. elektrisch wirkenden Federn den Vorteil, dass auf Hilfssysteme (z.B. Pneumatik, Hydraulik, ...) verzichtet werden kann.

Eine weitere günstige Ausgestaltung einer Schneckenpresse ist dadurch gekennzeichnet, dass bei überwiegender Kompensationskraft der Sensor entlang der Führung entgegen der aus dem auf den Sensor wirkenden Druck resultierenden Kraft bewegbar ist und im Falle einer überwiegenden aus dem auf den Sensor wirkenden Druck resultierenden Kraft der Sensor entlang der Führung in Richtung der aus dem Druck resultierenden Kraft bewegbar ist. Überraschenderweise ist die resultierende Kraft infolge des auf den Sensor wirkenden Drucks mit der Position des Sensors im Austrittsbereich veränderlich. Vorteilhafterweise erlaubt die Führung eine Positionierung des Sensors, wobei entlang der Führung der Abstand des Sensors von der Rotationsachse veränderlich ist. Wird dann beispielsweise der Sensor durch eine größere resultierende Kraft entgegen der kleineren, konstanten Kompensationskraft entlang der Führung bewegt, so verändert sich dabei der Abstand des Sensors von der Rotationsachse. Mit Veränderung des Abstands des Sensors von der Rotationsachse nähert sich erfindungsgemäß die resultierende Kraft der konstanten Kompensationskraft betragsmäßig an. Umgekehrt, wenn beispielsweise der Sensor durch die größere, konstante Kompensationskraft entgegen der kleineren resultierenden Kraft entlang der Führung bewegt wird, so verändert sich dabei ebenso der Abstand des Sensors von der Rotationsachse. Mit Veränderung des Abstands des Sensors von der Rotationsachse nähert sich wieder erfindungsgemäß die resultierende Kraft der konstanten Kompensationskraft betragsmäßig an. Diese Selbstregelung führt zu einer Positionierung des Sensors, wobei der auf den Sensor wirkende Druck kompensiert wird.

Ziel der Erfindung ist auch ein Verfahren zur Abscheidung von Filtrat aus einem Aufgabegut mit einer einfachen, zeitnahen und genauen Messung des Filtratgehalts.

Dies gelingt erfindungsgemäß dadurch, dass im Austrittsbereich eine Messung des Filtratgehalts des Aufgabeguts erfolgt, wobei der Sensor zur Messung des Filtratgehalts von dem Aufgabegut angeströmt und / oder umströmt wird. Im Austrittsbereich erfolgt nach der Komprimierung des Aufgabeguts im Entwässerungsbereich eine Entspannung des Aufgabeguts. Die Durchführung der Messung des Filtratgehalts im Austrittsbereich und nicht im Entwässerungsbereich ist überraschenderweise von Vorteil. Erfindungsgemäß wird der Sensor zur Messung des Filtratgehalts von dem Aufgabegut angeströmt und / oder umströmt, wobei der Sensor zur Messung des Filtratgehalts auf der Messung der Dielektrizitätskonstanten des Aufgabeguts beruht.

Erfindungsgemäß ist das Verfahren dadurch gekennzeichnet, dass die Sensoranordnung eine Kompensierung des vom Aufgabegut auf den Sensor wirkenden Drucks erlaubt, wobei der Sensor zur Kompensierung des von dem Aufgabegut auf den Sensor wirkenden Drucks über die Führung der Sensoranordnung im Austrittsbereich bewegt wird. Überraschenderweise wurde erkannt, dass der auf den Sensor wirkende Druck mit der Positionierung des Sensors im Austrittsraum veränderlich ist. Daher wird die Kompensierung des auf den Sensor wirkenden Drucks dadurch möglich, dass der Sensor einem gegenüber dem Soll-Druck abweichenden Druck entlang der Führung ausweicht und sich im Austrittsbereich entsprechend dem Soll-Druck positioniert. Derart positioniert wird ein konstanter auf den Sensor wirkender Druck (Soll-Druck) realisiert und folglich eine Beeinflussung der Dielektrizitätskonstanten durch Druckeinflüsse vermieden.

Eine weitere günstige Ausgestaltung des Verfahrens ist dadurch gekennzeichnet, dass über die Führung eine Kompensationskraft auf den Sensor aufgebracht wird, wobei die Kompensationskraft der Kraft aus dem auf den Sensor wirkenden Druck entgegengesetzt wirkt. Bei einer Abweichung zwischen Kompensationskraft und Kraft aus dem Druck des Aufgabeguts kommt es zu einer Bewegung entlang der Führung in Richtung der größeren Kraft. Mit der Bewegung des Sensors im Austrittsraum verändert sich auch der auf den Sensor wirkende Druck, wobei der Sensor sich im Austrittsbereich entsprechend dem Soll-Druck positioniert, bzw. entsprechend dem Gleichgewicht der auf den Sensor wirkenden Kräfte aus Kompensationskraft und Kraft aus dem Druck des Aufgabeguts.

Eine vorteilhafte Ausgestaltung des Verfahrens ist dadurch gekennzeichnet, dass eine konstante Kompensationskraft auf den Sensor aufgebracht wird.

Eine ebenso vorteilhafte Ausgestaltung des Verfahrens ist dadurch gekennzeichnet, dass auf den Sensor über die Feder der Sensoranordnung die Kompensationskraft aufgebracht wird, wobei die Feder pneumatisch, hydraulisch, elektrisch oder magnetisch wirkend ist. Vorteilhafterweise erlauben pneumatisch, hydraulisch, elektrisch oder magnetisch wirkende Federn das Aufbringen einer Kompensationskraft auf den Sensor über zumindest einen Teilbereich des Verfahrbereichs.

Eine weitere vorteilhafte Ausgestaltung des Verfahrens ist dadurch gekennzeichnet, dass eine konstante Kompensationskraft auf den Sensor über die magnetische Feder aufgebracht wird. Magnetische Federn sind besonders vorteilhaft, da diese unabhängig von Nebensystemen (Hydraulik, Pneumatik,...) das Aufbringen einer konstanten Kompensationskraft auf den Sensor über zumindest einen Teilbereich der Führung erlauben.

Eine vorteilhafte Ausgestaltung des Verfahrens ist dadurch gekennzeichnet, dass bei überwiegender Kompensationskraft der Sensor entlang der Führung entgegen der aus dem auf den Sensor wirkenden Druck resultierenden Kraft bewegt wird und im Falle einer überwiegenden aus dem auf den Sensor wirkenden Druck resultierenden Kraft der Sensor entlang der Führung in Richtung der aus dem Druck resultierenden Kraft bewegt wird. Vorteilhafterweise erlaubt die Führung eine Positionierung des Sensors, wobei entlang der Führung der Abstand des Sensors von der Rotationsachse veränderlich ist. Wird beispielsweise der Sensor durch eine größere aus dem Druck resultierende Kraft entgegen der kleineren, konstanten Kompensationskraft entlang der Führung bewegt, dann nähert sich die resultierende Kraft der konstanten Kompensationskraft betragsmäßig an. Umgekehrt, wenn beispielsweise der Sensor durch die größere, konstante Kompensationskraft entgegen der kleineren aus dem Druck resultierenden Kraft entlang der Führung bewegt wird, nähert sich ebenso die resultierende Kraft der konstanten Kompensationskraft betragsmäßig an. Diese Selbstregelung führt zu einer Selbstpositionierung des Sensors, wobei der auf den Sensor wirkende Druck kompensiert wird.

Ebenso vorteilhaft ist die Verwendung eines Sensors zur Messung des Filtratgehalts des Aufgabeguts in einer erfindungsgemäßen Schneckenpresse, wobei der Sensor in einer Sensoranordnung angeordnet ist und der Sensor von dem Aufgabegut angeströmt und / oder umströmt ist. Erfindungsgemäß erfolgt die Verwendung mit einer Kompensierung des auf den Sensor wirkenden Drucks, wobei der Sensor zur Kompensierung des von dem Aufgabegut auf den Sensor wirkenden Drucks über die Führung der Sensoranordnung im Austrittsbereich bewegt wird.

Die Erfindung wird nun anhand der Zeichnungen beispielhaft beschrieben.
Fig. 1 zeigt eine erfindungsgemäße Schneckenpresse.
Fig. 2 zeigt im Detail den Austrittsbereich einer erfindungsgemäßen Schneckenpresse.
Fig. 3 zeigt eine vorteilhafte Sensoranordnung.
Fig. 4 zeigt eine vorteilhafte Sensoranordnung im Austrittsbereich der Schneckenpresse.
Fig. 5. zeigt die vorteilhafte Sensoranordnung im Austrittsbereich der Schneckenpresse mit Blickrichtung in Richtung der Rotationsachse.

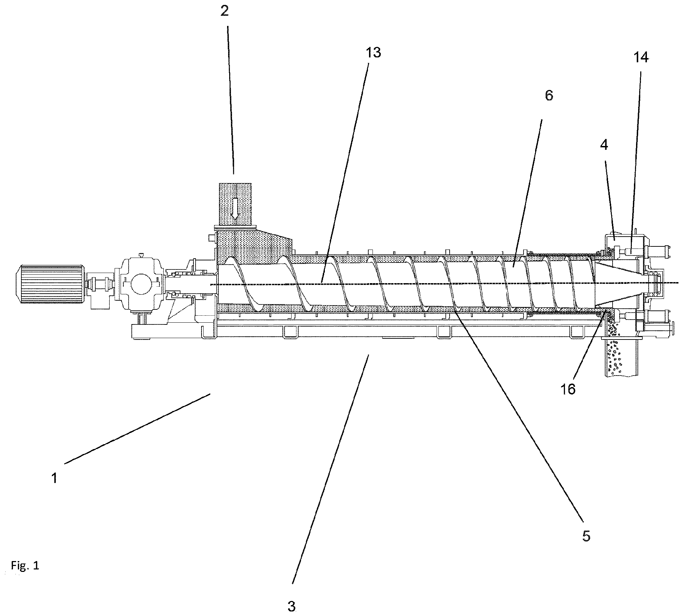

Fig. 1 zeigt eine erfindungsgemäße Schneckenpresse. Die Schneckenpresse 1 umfasst einen Aufgabebereich 2, einen Entwässerungsbereich 3 und einen Austrittsbereich 4. Der Entwässerungsbereich 3 umfasst eine in einer Filtertrommel 5 um eine Rotationsachse 13 drehbar angeordnete Pressschnecke 6. Die Pressschnecke 6 kann beispielsweise eine auf einem Schaft angeordnete Wendel umfassen. Der Raum zwischen der Filtertrommel 5 und der Pressschnecke 6 verengt sich zunehmend in Richtung des Austrittsbereichs 4. Das Aufgabegut wird der Schneckenpresse 1 über den Aufgabebereich 2 zugeführt, wobei das Filtrat aus dem Aufgabegut im Entwässerungsbereich 3 durch die Filtertrommel 5 abgeschieden wird. Zu diesem Zweck weist die Filtertrommel 5 Öffnungen auf und ist beispielsweise perforiert. Durch die Rotation der Pressschnecke 6 in der Filtertrommel 5 wird das Aufgabegut aus dem Aufgabebereich 2 über den Entwässerungsbereich 3 dem Austrittsbereich 4 zugeführt, wobei das Aufgabegut im Entwässerungsbereich 3 in Richtung des Austrittsbereichs 4 zunehmend komprimiert wird. Über den zwischen der Filtertrommel 5 und der Pressschnecke 6 gebildeten Ring 16 tritt das Aufgabegut in den Austrittsbereich 4 ein, wobei die Pressschnecke 6 das Aufgabegut aus dem Entwässerungsbereich 3 gegen die Gegendruckeinheit 14 fördert. Die Gegendruckeinheit 14 ist beispielsweise kreisringförmig ausgebildet, wobei in Rotationsrichtung 13 betrachtet der Kreisring der Gegendruckeinheit 14 zumindest mit dem Ring 16 zwischen der Filtertrommel 5 und der Pressschnecke 6 in Deckung gebracht werden kann. Das Aufgabegut wird an der Gegendruckeinheit 14 radial nach außen umgelenkt, wobei das Aufgabegut entsprechend der Rotation der Pressschnecke 6 auch eine Geschwindigkeitskomponente in Umfangsrichtung aufweist. Mit der Umlenkung des Aufgabeguts an der Gegendruckeinheit 14 erfolgt eine Entspannung des Aufgabeguts im Austrittsbereich 4. So erlaubt die Gegendruckeinheit 14 den Druckaufbau im Fördergut im Entwässerungsbereich 3, und mit der Umlenkung des Förderguts an der Gegendruckeinheit 14 erfolgt der Druckabbau im Fördergut. Erfindungsgemäß ist im Austrittsbereich 4 die Sensoranordnung 9 umfassend einen Sensor 7 angeordnet (nicht dargestellt in Fig. 1), wobei der Sensor 7 von dem Aufgabegut anströmbar und / oder umströmbar ist.

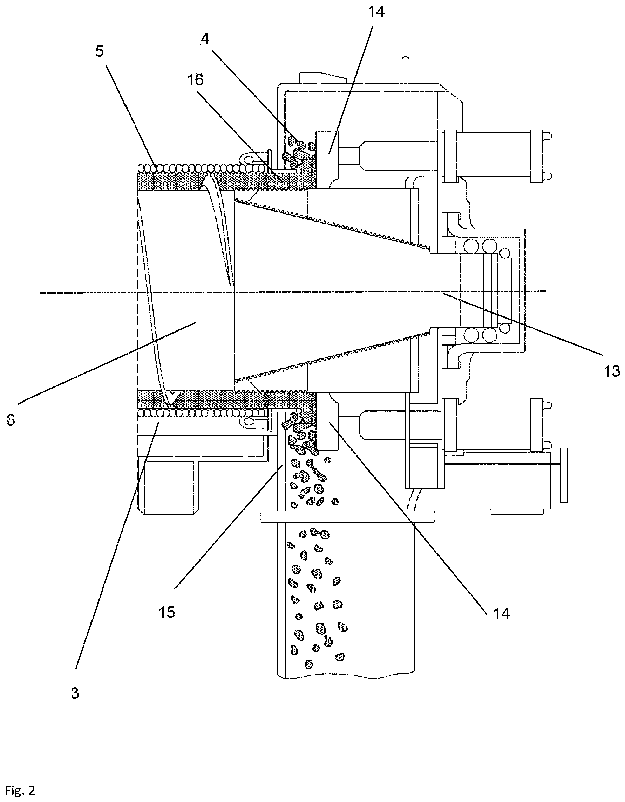

Fig. 2 zeigt im Detail den Austrittsbereich einer erfindungsgemäßen Schneckenpresse. Im Entwässerungsbereich 3 wird das Aufgabegut in Richtung des Austrittsbereichs 4 komprimiert, wobei das Aufgabegut im Spaltbereich zwischen der Filtertrommel 5 und der Pressschnecke 6 geführt ist und die Pressschnecke 6 das Aufgabegut aus dem Entwässerungsbereich 3 durch den Spalt 16 gegen die Gegendruckeinheit 14 fördert. Dabei umfasst die Pressschnecke 6 beispielsweise einen Schaft und eine spiralförmige Wendel. Das Aufgabegut tritt durch den zwischen der Filtertrommel 5 und der Pressschnecke 6 gebildeten Ring 16 in den Austrittsbereich 4 ein. Das Aufgabegut wird zwischen der Wandung 15 des Austrittsbereichs 4 und der Gegendruckeinheit 14 radial nach außen umgelenkt, wobei das Aufgabegut entsprechend der Rotation der Pressschnecke 6 auch eine Umfangsgeschwindigkeitskomponente aufweist. Mit der Umlenkung des Aufgabeguts an der Gegendruckeinheit 14 erfolgt eine Entspannung des Aufgabeguts im Austrittsbereich 4.

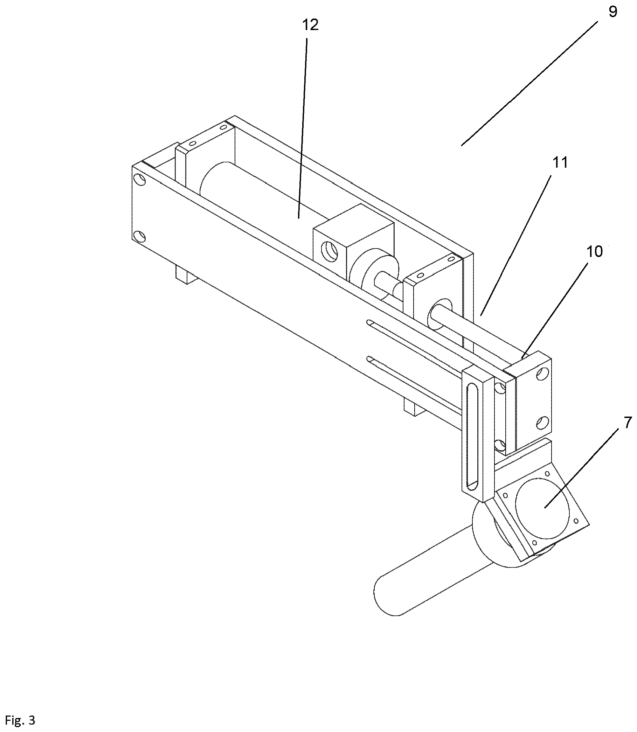

Fig. 3 zeigt eine vorteilhafte Sensoranordnung. Erfindungsgemäß umfasst die Sensoranordnung 9 einen Sensor 7 zur Messung des Filtratgehalts des Aufgabeguts.

Vorteilhafterweise beruht die Messung des Filtratgehalts auf der Messung der Dielektrizitätskonstanten des Aufgabeguts. Weiter umfasst vorteilhafterweise die Sensoranordnung 9 eine Führung 10 und eine Feder 12. Der Sensor 7 ist dabei über die Führung 10 mit der Feder 12 verbunden, wobei der Sensor 7 über die Führung 10 bewegbar ist. Der von dem Aufgabegut auf den Sensor 7 wirkende Druck, bzw. die daraus resultierende Kraft, wird über die Führung 10 auf die Feder 12 übertragen, wobei die Feder 12 eine Kompensationskraft auf die Führung 10 überträgt. Die Kompensationskraft der Feder 12 und die aus dem Aufgabegut auf die Führung 10 resultierende Kraft sind dabei entgegengesetzt orientiert entsprechend dem Gegenwirkungsprinzip (actio reactio). Entsprechend wird bei Überwiegen der Kompensationskraft der Sensor 7 über die Führung 10 entgegen der aus dem auf den Sensor 7 wirkenden Druck resultierenden Kraft bewegt bzw. im Falle einer überwiegenden aus dem auf den Sensor 7 wirkenden Druck resultierenden Kraft wird der Sensor 7 entlang der Führung 10 in Richtung der resultierenden Kraft bewegt. Solange das Kräftegleichgewicht von resultierender Kraft und Kompensationskraft gegeben ist, kommt es zu keiner weiteren Bewegung des Sensors. Derart erlaubt die Sensoranordnung 9 die Kompensierung der von dem Aufgabegut auf den Sensor 7 wirkenden resultierenden Kraft. Vorteilhafterweise erlaubt die Feder 12 die Aufbringung einer konstanten Kompensationskraft auf den Sensor 7. Da der Sensor 7 über die Führung in einem Verfahrbereich 11 bewegbar ist, ist dann über die Feder 12 zumindest in einem Teilbereich des Verfahrbereichs 11 die konstante Kompensationskraft auf den Sensor 7 aufbringbar. Vorteilhafterweise ist die Feder 12 pneumatisch, hydraulisch, elektrisch oder magnetisch wirkend. Mit einer magnetisch wirkenden Feder 12 kann eine Kraftwirkung über einen Bereich bzw. eine konstante Kraftwirkung auf den Sensor 7 zumindest in einem Teilbereich des Verfahrbereichs 11 realisiert werden. Solche magnetisch wirkenden Federn 12 werden beispielsweise als Konstantkraft-Federn für den industriellen Einsatz angeboten und haben gegenüber pneumatisch, hydraulisch bzw. elektrisch wirkenden Federn den Vorteil, dass auf Hilfssysteme (z.B. Pneumatik, Hydraulik, ...) verzichtet werden kann.

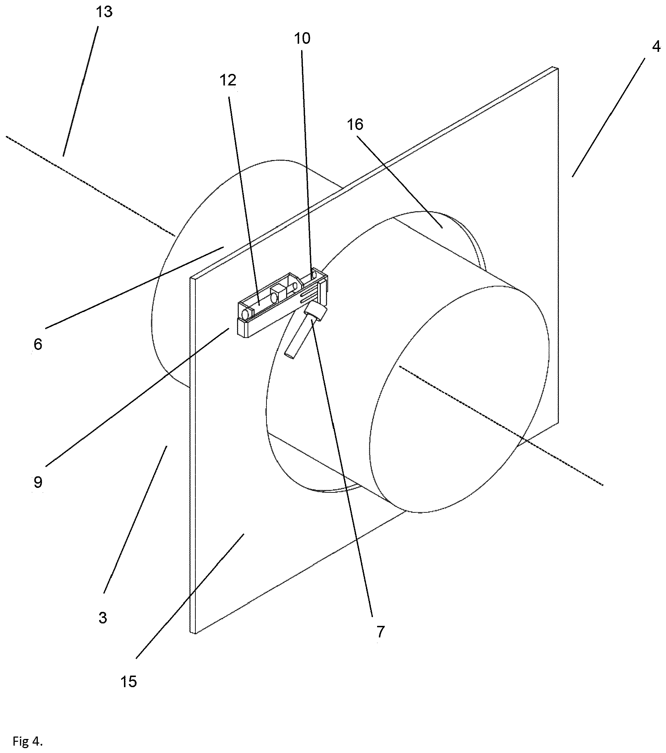

Fig. 4. zeigt eine vorteilhafte Sensoranordnung im Austrittsbereich der Schneckenpresse. Dabei ist schematisch die um die Rotationsachse 13 drehbar angeordnete Pressschnecke 6 angedeutet, wobei die Pressschnecke 6 sich aus dem Entwässerungsbereich 3 bis in den Austrittsbereich 4 erstreckt. Das Fördergut wird über den Spalt 16 zwischen der Filtertrommel 5 (nicht dargestellt) und der Pressschnecke 6, bzw. über den Spalt 16 zwischen der Wandung 15 des Austrittsbereichs 4 und der Pressschnecke 6 dem Austrittsbereichs 4 zugeführt. Die Sensoranordnung 9 kann an der Wandung 15 des Austrittsbereichs befestigt werden. Die Sensoranordnung 9 umfasst den Sensor 7, die Führung 10 und die Feder 12, wobei die Führung 10 ein Bewegen des Sensors 7 in einem Verfahrbereich 11 ermöglicht. Der Sensor 7 ist von dem Aufgabegut anströmbar und / oder umströmbar. Dabei wird das Aufgabegut aus dem Entwässerungsbereich 3 in den Austrittsbereich 4 geführt und zwischen der Wandung 15 des Austrittsbereichs 4 und der Gegendruckeinheit 14 radial nach außen umgelenkt, wobei das Aufgabegut entsprechend der Rotation der Pressschnecke 6 auch eine Umfangsgeschwindigkeitskomponente aufweist. Vorteilhafterweise ist in Axialrichtung, d.h. in Richtung der Rotationsachse 13, betrachtet der Sensor 7 zwischen der Wandung 15 des Austrittsbereichs 4 und der Gegendruckeinheit 14 positioniert, wobei das Aufgabegut nach der Umlenkung an der Gegendruckeinheit den Sensor 7 anströmt und / oder umströmt. Bei Bewegung des Sensors 7 innerhalb des Verfahrbereichs 11 der Führung 10 im Austrittsbereich 4 ist vorteilhafterweise eine Positionierbarkeit des Sensors 7 innerhalb und / oder außerhalb des Spalts 16 zwischen der Wandung 15 des Austrittsbereichs 4 und der Pressschnecke 6 gegeben, wodurch der Sensor 7 gut durch das Aufgabegut anströmbar und / oder umströmbar ist.

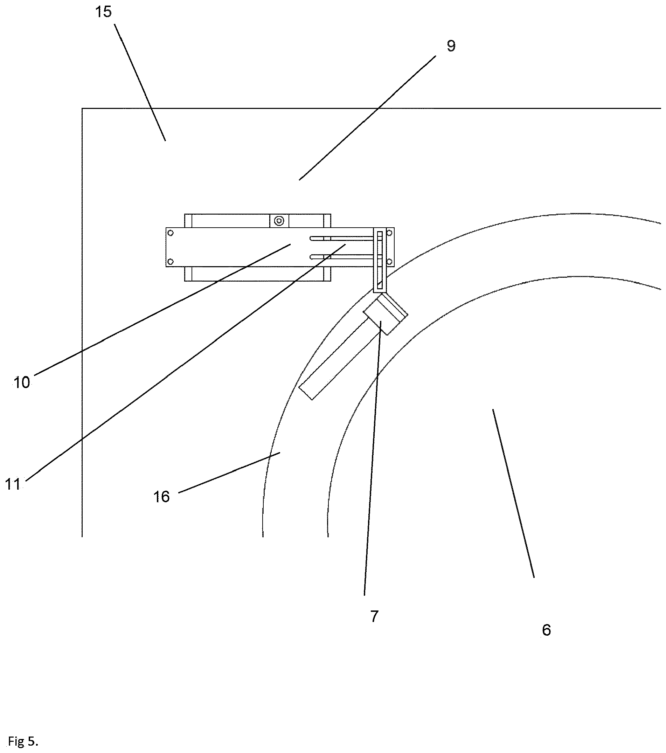

Fig. 5. zeigt die vorteilhafte Sensoranordnung im Austrittsbereich der Schneckenpresse mit Blick in Richtung der Rotationsachse. Es ist schematisch die Pressschnecke 6 angedeutet, wobei die Pressschnecke 6 sich bis in den Austrittsbereich 4 erstreckt. Das Fördergut wird über den Spalt 16 zwischen der Filtertrommel 5 (nicht dargestellt) und der Pressschnecke 6, bzw. über den Spalt 16 zwischen der Wandung 15 des Austrittsbereichs 4 und der Pressschnecke 6 dem Austrittsbereichs 4 zugeführt. Die Sensoranordnung 9 ist an der Wandung 15 des Austrittsbereichs 4 befestigt und umfasst den Sensor 7, die Führung 10 und die Feder 12, wobei die Führung 10 ein Bewegen des Sensors 7 in einem Verfahrbereich 11 ermöglicht. Der Sensor 7 wird durch das Aufgabegut angeströmt und / oder umströmt. Bei Bewegung des Sensors 7 innerhalb des Verfahrbereichs 11 der Führung 10 im Austrittsbereich 4 ist vorteilhafterweise eine Positionierbarkeit des Sensors 7 innerhalb und / oder außerhalb des Spalts 16 zwischen der Wandung 15 des Austrittsbereichs 4 und der Pressschnecke 6 gegeben, wodurch der Sensor 7 gut vom Aufgabegut anströmbar und / oder umströmbar ist.

Die vorliegende Erfindung bietet zahlreiche Vorteile. Sie erlaubt eine einfache, zeitnahe und genaue Messung des Filtratgehalts eines mit einer Schneckenpresse verarbeiteten Aufgabeguts. Durch die genaue Bestimmung des Filtratgehalts kann der Betrieb der Schneckenpresse auf das Erreichen eines bestimmten Filtratgehalts abgestellt werden, und die üblichen Einflussparameter (Pressschneckendrehzahl, Druck der Gegendruckeinheit,... ) automatisiert zur Einstellung des gewünschten Filtratgehalts geregelt werden. Dabei ist ein exakt eingestellter Filtratgehalt nach der Schneckenpresse vorteilhaft für nachfolgende Prozesse, da ein optimaler Betriebspunkt einstellbar ist.

### Bezugszeichen

- (1): Schneckenpresse
- (2): Aufgabebereich
- (3): Entwässerungsbereich
- (4): Austrittsbereich
- (5): Filtertrommel
- (6): Pressschnecke
- (7): Sensor
- (8): Axialrichtung
- (9): Sensoranordnung
- (10): Führung
- (11): Verfahrbereich
- (12): Feder
- (13): Rotationsachse
- (14): Gegendruckeinheit
- (15): Wandung
- (16): Spalt

## Patentansprüche

1. Schneckenpresse (1) zum Abscheiden von Filtrat aus einem Aufgabegut, umfassend einen Aufgabebereich (2), einen Entwässerungsbereich (3) und einen Austrittsbereich (4), wobei der Schneckenpresse (1) über den Aufgabebereich (2) das Aufgabegut zuführbar ist, der Entwässerungsbereich (3) eine in einer Filtertrommel (5) um eine Rotationsachse (13) drehbar angeordnete Pressschnecke (6) umfasst und durch Rotation der Pressschnecke (6) das Aufgabegut aus dem Aufgabebereich (2) über den Entwässerungsbereich (3) dem Austrittsbereich (4) zuführbar ist, wobei das Aufgabegut im Entwässerungsbereich (3) zwischen der Filtertrommel (5) und der Pressschnecke (6) geführt ist, das Filtrat durch die Filtertrommel (5) abscheidbar ist und im Austrittsbereich (4) eine Sensoranordnung (9) umfassend einen Sensor (7) zur Messung des Filtratgehalts angeordnet ist, wobei der Sensor (7) von dem Aufgabegut anströmbar und / oder umströmbar ist, **dadurch gekennzeichnet, dass** ein von dem Aufgabegut auf den Sensor (7) wirkender Druck über die Sensoranordnung (9) kompensierbar ist, wobei die Sensoranordnung (9) eine Führung (10) umfasst und der Sensor (7) zur Kompensierung des vom Aufgabegut auf den Sensor (7) wirkenden Drucks über die Führung (10) im Austrittsbereich (4) bewegbar ist.

2. Schneckenpresse (1) nach Anspruch 1, **dadurch gekennzeichnet, dass** über die Führung (10) eine Kompensationskraft auf den Sensor (7) aufbringbar ist, wobei die Kompensationskraft der aus dem auf den Sensor (7) wirkenden Druck resultierenden Kraft entgegengesetzt ist.

3. Schneckenpresse (1) nach Anspruch 2, **dadurch gekennzeichnet, dass** eine konstante Kompensationskraft auf den Sensor (7) aufbringbar ist.

4. Schneckenpresse (1) nach einem der Ansprüche 2 bis 3, **dadurch gekennzeichnet, dass** die Sensoranordnung (9) eine Feder (12) umfasst, wobei die Feder (12) pneumatisch, hydraulisch, elektrisch oder magnetisch wirkend ist und über die Feder (12) die Kompensationskraft auf den Sensor (7) aufbringbar ist.

5. Schneckenpresse (1) nach Anspruch 2, **dadurch gekennzeichnet, dass** die Kompensationskraft über eine magnetische Feder (12) auf den Sensor (7) aufbringbar ist, wobei die Kompensationskraft konstant ist.

6. Schneckenpresse (1) nach einem der Ansprüche 2 bis 5, **dadurch gekennzeichnet, dass** bei überwiegender Kompensationskraft der Sensor (7) entlang der Führung (10) entgegen der aus dem auf den Sensor (7) wirkenden Druck resultierenden Kraft bewegbar ist und im Falle einer überwiegenden aus dem auf den Sensor (7) wirkenden Druck resultierenden Kraft der Sensor (7) entlang der Führung (10) in Richtung der aus dem Druck resultierenden Kraft bewegbar ist.

7. Verfahren zur Abscheidung von Filtrat aus einem Aufgabegut, bei dem das Aufgabegut einer Schneckenpresse (1) nach einem der Ansprüche 1 bis 6 über den Aufgabebereich (2) zugeführt wird, im Entwässerungsbereich (3) zwischen der um die Rotationsachse (13) rotierenden Pressschnecke (6) und der Filtertrommel (5) das Filtrat aus dem Aufgabegut abgeschieden wird, wobei das Aufgabegut zwischen dem Aufgabebereich (2) und dem Austrittsbereich (4) komprimiert und das Filtrat durch die Filtertrommel (5) abgeführt wird und im Austrittsbereich (4) eine Messung des Filtratgehalts des Aufgabeguts erfolgt, wobei der Sensor (7) zur Messung des Filtratgehalts von dem Aufgabegut angeströmt und / oder umströmt wird, **dadurch gekennzeichnet, dass** die Sensoranordnung (9) eine Kompensierung des von dem Aufgabegut auf den Sensor (7) wirkenden Drucks erlaubt, wobei der Sensor (7) zur Kompensierung des von dem Aufgabegut auf den Sensor (7) wirkenden Drucks über die Führung (10) der Sensoranordnung (9) im Austrittsbereich (4) bewegt wird.

8. Verfahren nach Anspruch 7, **dadurch gekennzeichnet, dass** über die Führung (10) eine Kompensationskraft auf den Sensor (7) aufgebracht wird, wobei die Kompensationskraft der Kraft aus dem auf den Sensor (7) wirkenden Druck entgegengesetzt wirkt.

9. Verfahren nach Anspruch 8, **dadurch gekennzeichnet, dass** eine konstante Kompensationskraft auf den Sensor (7) aufgebracht wird.

10. Verfahren nach einem der Ansprüche 8 bis 9, **dadurch gekennzeichnet, dass** auf den Sensor (7) über die Feder (12) der Sensoranordnung (9) die Kompensationskraft aufgebracht wird, wobei die Feder (12) pneumatisch, hydraulisch, elektrisch oder magnetisch wirkend ist.

11. Verfahren nach Anspruch 8, **dadurch gekennzeichnet, dass** eine konstante Kompensationskraft auf den Sensor (7) über eine ein magnetische Feder (12) aufgebracht wird.

12. Verfahren nach einem der Ansprüche 8 bis 11, **dadurch gekennzeichnet, dass** bei überwiegender Kompensationskraft der Sensor (7) entlang der Führung (10) entgegen der aus dem auf den Sensor (7) wirkenden Druck resultierenden Kraft bewegt wird und im Falle einer überwiegenden aus dem auf den Sensor (7) wirkenden Druck resultierenden Kraft der Sensor (7) entlang der Führung (10) in Richtung der aus dem Druck resultierenden Kraft bewegt wird.

13. Verwendung eines Sensors (7) zur Messung des Filtratgehalts des Aufgabeguts in einer Schneckenpresse (1) nach einem der Ansprüche 1 bis 6, wobei der Sensor (7) in der Sensoranordnung (9) angeordnet ist und der Sensor (7) von dem Aufgabegut angeströmt und / oder umströmt ist.

## Claims

1. Screw press (1) for separating filtrate from a feed material, comprising a feed area (2), a dewatering area (3) and a discharge area (4), where the feed material can be fed to the screw press (1) via the feed area (2), the dewatering area (3) comprises a pressing screw (6) arranged in a filter drum (5) so as to be rotatable around an axis of rotation (13) and, by rotation of the pressing screw (6), the feed material can be fed from the feed area (2) via the dewatering area (3) to the discharge area (4), where the feed material is guided in the dewatering area (3) between the filter drum (5) and the pressing screw (6), the filtrate can be separated through the filter drum (5), and a sensor arrangement (9) comprising a sensor (7) for measuring the filtrate content is arranged in the discharge area (4), where the feed material can flow against and/or around the sensor (7), **characterised in that** a pressure acting on the sensor (7) from the feed material can be compensated via the sensor arrangement (9), where the sensor arrangement (9) comprises a guide (10) and the sensor (7) can be moved by means of the guide (10) in the discharge area (4) to compensate for the pressure acting on the sensor (7) from the feed material.

2. Screw press (1) according to claim 1, **characterised in that** a compensation force can be applied to the sensor (7) via the guide (10), the compensation force resisting the force resulting from the pressure acting on the sensor (7).

3. Screw press (1) according to claim 2, **characterised in that** a constant compensation force can be applied to the sensor (7).

4. Screw press (1) according to one of claims 2 to 3, **characterised in that** the sensor arrangement (9) comprises a spring (12), where the spring (12) acts pneumatically, hydraulically, electrically, or magnetically, and the compensation force can be applied to the sensor (7) via the spring (12).

5. Screw press (1) according to claim 2, **characterised in that** the compensation force can be applied to the sensor (7) via a magnetic spring (12), the compensation force being constant.

6. Screw press (1) according to one of claims 2 to 5, **characterised in that** the sensor (7) is movable along the guide (10) against the force resulting from the pressure acting on the sensor (7) in the case of a predominant compensation force and **in that** the sensor (7) is movable along the guide (10) in the direction of the force resulting from the pressure in the case of a predominant force resulting from the pressure acting on the sensor (7).

7. Method for separating filtrate from a feed material, in which the feed material is fed to a screw press (1) according to one of the claims 1 to 6 via the feed area (2), the filtrate is separated from the feed material in the dewatering area (3) between the pressing screw (6) rotating around the axis of rotation (13) and the filter drum (5), the feed material being compressed between the feed area (2) and the discharge area (4) and the filtrate being discharged through the filter drum (5), and the filtrate content of the feed material is measured in the discharge area (4), the feed material flowing against and/or flowing around the sensor (7) for measuring the filtrate content, **characterised in that** the sensor arrangement (9) allows compensation of the pressure acting on the sensor (7) from the feed material, the sensor (7) being moved by means of the guide (10) of the sensor arrangement (9) in the discharge area (4) to compensate for the pressure acting on the sensor (7) from the feed material.

8. Method according to claim 7, **characterised in that** a compensation force can be applied to the sensor (7) via the guide (10), the compensation force resisting the force resulting from the pressure acting on the sensor (7).

9. Method according to claim 8, **characterised in that** a constant compensation force can be applied to the sensor (7).

10. Method according to one of claims 8 to 9, **characterised in that** the compensation force is applied to the sensor (7) via the spring (12) of the sensor arrangement (9), the spring (12) acting pneumatically, hydraulically, electrically, or magnetically.

11. Method according to claim 8, **characterised in that** a constant compensation force is applied to the sensor (7) via a magnetic spring (12).

12. Method according to one of claims 8 to 11, **characterised in that** the sensor (7) is movable along the guide (10) against the force resulting from the pressure acting on the sensor (7) in the case of a predominant compensation force and **in that** the sensor (7) is movable along the guide (10) in the direction of the force resulting from the pressure in the case of a predominant force resulting from the pressure acting on the sensor (7).

13. Use of a sensor (7) for measuring the filtrate content of the feed material in a screw press (1) according to one of claims 1 to 6, where the sensor (7) is arranged in the sensor arrangement (9) and the feed material flows against and/or around the sensor (7).

## Revendications

1. Presse à vis (1) destinée la séparation de filtrat d'une matière de base, comprenant une zone d'alimentation (2), une zone de déshydratation (3) et une zone de sortie (4), la matière de base étant introduite dans la presse à vis (1) par l'intermédiaire de la zone d'alimentation (2), la zone de déshydratation (3) comprenant une vis de presse (6) disposée dans un filtre à tambour (5) de manière à pouvoir tourner autour d'un axe de rotation (13) et, par la rotation de la vis de presse (6), la matière de base peut être introduite depuis la zone d'alimentation (2) par l'intermédiaire de la zone déshydratation (3) dans la zone de sortie (4), la matière de base étant guidée dans la zone de déshydratation (3) entre le filtre à tambour (5) et la vis de presse (6), le filtrat peut être séparé par le filtre à tambour (5), et un ensemble capteur (9) comprenant un capteur (7) destiné à mesurer la teneur de filtrat est disposé dans la zone de sortie (4), la matière de base pouvant s'écouler contre et/ou autour du capteur (7), **caractérisée en ce qu'**une pression agissant sur le capteur (7) provenant de la matière de base peut être compensée au moyen de l'ensemble capteur (9), l'ensemble capteur (9) comprenant un guide (10) et le capteur (7) pouvant être déplacé à l'aide du guide (10) dans la zone de sortie (4) pour compenser la pression agissant sur le capteur (7) provenant de la matière de base.

2. Presse à vis (1) selon la revendication 1, **caractérisée en ce qu'**une force de compensation peut être appliquée au capteur (7) par l'intermédiaire du guide (10), la force de compensation résistant à la force obtenue par la pression agissant sur le capteur (7).

3. Presse à vis (1) selon la revendication 2, **caractérisée en ce qu'**une force de compensation constante peut être appliquée au capteur (7).

4. Presse à vis (1) selon l'une quelconque des revendications 2 à 3, **caractérisée en ce que** l'ensemble capteur (9) comprend un ressort (12), le ressort (12) agissant pneumatiquement, hydrauliquement, électriquement ou magnétiquement, et la force de compensation peut être appliquée au capteur (7) par l'intermédiaire du ressort (12).

5. Presse à vis (1) selon la revendication 2, **caractérisée en ce que** la force de compensation peut être appliquée au capteur (7) par l'intermédiaire d'un ressort magnétique (12), la force de compensation étant constante.

6. Presse à vis (1) selon l'une quelconque des revendications 2 à 5, **caractérisée en ce que** le capteur (7) peut être déplacé le long du guide (10) contre la force obtenue à partir de la pression agissant sur le capteur (7) dans le cas d'une force de compensation prédominante et **en ce que** le capteur (7) peut se déplacer le long du guide (10) dans la direction de la force obtenue à partir de la pression dans le cas d'une force prédominante obtenue à partir de la pression agissant sur le capteur (7).

7. Procédé de séparation de filtrat d'une matière de base, dans lequel la matière de base est introduite dans une presse à vis (1) selon l'une quelconque des revendications 1 à 6 par l'intermédiaire de la zone d'alimentation (2), le filtrat est séparé de la matière de base dans la zone de déshydratation (3) entre la vis de presse (6) tournant autour de l'axe de rotation (13) et le filtre à tambour (5), la matière de base étant compressée entre la zone d'alimentation (2) et la zone de sortie (4) et le filtrat étant évacué par le biais du filtre à tambour (5), et la teneur en filtrat de la matière de base est mesurée dans la zone de sortie (4), la matière de base s'écoulant contre et/ou s'écoulant autour du capteur (7) pour mesurer la teneur en filtrat, **caractérisé en ce que** l'ensemble capteur (9) permet la compensation de la pression agissant sur le capteur (7) provenant de la matière de base, le capteur (7) étant déplacé au moyen du guide (10) de l'ensemble capteur (9) dans la zone de sortie (4) pour compenser la pression agissant sur le capteur (7) provenant de la matière de base.

8. Procédé selon la revendication 7, **caractérisé en ce qu'**une force de compensation peut être appliquée au capteur (7) par l'intermédiaire du guide (10), la force de compensation résistant à la force obtenue par la pression agissant sur le capteur (7).

9. Procédé selon la revendication 8, **caractérisé en ce qu'**une force de compensation constante peut être appliquée au capteur (7).

10. Procédé selon l'une quelconque des revendications 8 à 9, **caractérisé en ce que** la force de compensation est appliquée au capteur (7) par l'intermédiaire du ressort (12) de l'ensemble capteur (9), le ressort (12) agissant pneumatiquement, hydrauliquement, électriquement et magnétiquement.

11. Procédé selon la revendication 8, **caractérisé en ce qu'**une force de compensation constante est appliquée au capteur (7) par l'intermédiaire d'un ressort magnétique (12).

12. Procédé selon l'une quelconque des revendications 8 à 11, **caractérisé en ce que** le capteur (7) peut se déplacer le long du guide (10) contre la force obtenue par la pression agissant sur le capteur (7) dans le cas d'une force de compensation prédominante et **en ce que** le capteur (7) peut se déplacer le long du guide (10) dans la direction de la force obtenue à partir de la pression dans le cas d'une force prédominante obtenue à partir de la pression agissant sur le capteur (7).

13. Utilisation d'un capteur (7) destiné à mesurer la teneur en filtrat de la matière de base dans une presse à vis (1) selon l'une quelconque des revendications 1 à 6, dans laquelle le capteur (7) est disposé dans l'ensemble capteur (9) et la matière de base s'écoule contre et/ou autour du capteur (7).
